# EUROPEAN PATENT APPLICATION

(11) **EP 4 797 035 A1**
(43) Date of publication of application: **26.08.2026**
(21) Application number: 26156376.1
(22) Date of filing: 04.02.2026
(51) Int. Cl.: G05F 1/575, H02M 3/07

(54) **VOLTAGE DROP CONTROL CIRCUIT FOR A LOW POWER LDO REGULATOR**

(30) Priority: 25.02.2025 US 202519062244
(71) Applicant: STMicroelectronics International N.V., 1228 Plan-les-Ouates, Geneva (CH)
(72) Inventor: DE PASCALIS, Daniele, I-20090 Buccinasco (Milano) (IT); ORIO, Massimo, I-20126 Milano (IT); MARCHESE, Carmela, I-20152 Milano (IT)
(74) Representative: Buzzi, Notaro & Antonielli d'Oulx S.p.A.

(57) **Abstract**

A voltage-regulator (50) provides regulated-voltage to a digital circuit (60) from a supply-voltage input (VDD). The regulator (50) includes an amplifier (51) comparing a reference-voltage (Vbg) with the regulated-voltage to control a source-gate voltage of an output-transistor (MP1). A source-gate voltage-boosting circuit improves the response of the regulator (50) for operations with high current-demands like high-frequency digital-interface communication. The boosting-circuit includes a capacitor (C) switchable connected between the supply-voltage (VDD) and either a bias current source (IB3) or the gate of the output-transistor (MP1). A phase-generator (57) controls two switches (S1, S2) through non-overlapping control-signals (φint, φsh), implementing an integration-phase and a sharing-phase. During integration, the capacitor (C) charges to a voltage above the source-to-gate voltage of the output-transistor (MP1). During sharing, this charged capacitor (C) connects to the gate of the transistor (MP1), boosting the source-to-gate voltage to increase current sourcing capability during high-frequency digital circuit operation. A clock-gating circuit (55) enables the phase-generator (57) in response to clock activation, synchronizing the boost operation with periods of increased current demand.

## Description

### TECHNICAL FIELD

This disclosure relates to a voltage drop control circuit for a low power low-dropout (LDO) regulator operating at low supply voltages.

### BACKGROUND

The market for MEMS sensors increasingly demands devices with particular power consumption specifications and wide operating voltage ranges while maintaining compatibility with standard digital communication protocols at high operating frequencies. This demand creates challenges in power management design, especially regarding voltage regulation.

Certain current MEMS sensors typically operate with a minimum supply voltage (VDD) of 1.62V and employ standard voltage regulator circuit designs. These designs rely on the use of a high on-chip decoupling capacitance and predetermined bias current to maintain proper regulator operation. As an example, these approaches aim to ensure an output voltage total error of 200mV relative to the typical value of 1.2V, with a minimum of 1V.

However, these designs become ineffective when addressing the requirements of newer designs that are to operate with VDD as low as 1.2V while supplying digital logic at a typical voltage of 1.1V (with a 1V minimum). Under these conditions, maintaining the output voltage total error within 100mV necessitates substantially higher bias current. The issue with existing designs becomes apparent when VDD approaches 1.2V, as the digital components risk improper supply voltage due to significant voltage drops during digital communications. Compensating for this limitation requires high bias current, which conflicts with the goal of minimizing power consumption.

As such, further development is needed.

### SUMMARY

A device includes a voltage regulator having an input coupled to receive a supply voltage and an output configured to provide a regulated voltage to a digital circuit. The voltage regulator has an amplifier having a first input coupled to receive a reference voltage and a second input coupled to the output, a transistor having a first conduction terminal coupled to the supply voltage, a second conduction terminal coupled to the output, and a control terminal coupled to an output of the amplifier, a capacitor coupled between the supply voltage and a first node, a first switch coupled between the first node and a bias current source, a second switch coupled between the first node and the control terminal of the transistor, and a non-overlapped phase generator configured to generate non-overlapping first and second control signals to control the first and second switches respectively. During an integration phase controlled by the first control signal, the first switch is closed to charge the capacitor with a voltage above the conduction terminal to control terminal voltage of the transistor. During a sharing phase controlled by the second control signal, the second switch is closed to couple the charged capacitor to the control terminal of the transistor to boost its conduction terminal to control terminal voltage for increasing current sourcing capability during high-frequency operation of the digital circuit. The duration of the integration phase is independent of an operating frequency of the digital interface clock signal. The device also has a clock gating circuit configured to enable the non-overlapped phase generator and synchronize the integration and sharing phases with current demands from the digital circuit. The clock gating circuit may enable the non-overlapped phase generator in response to activation of a digital interface clock signal or when an application clock results in a large current demand.

The device may include a boost stop circuit configured to monitor the regulated voltage and disable the clock gating circuit when the regulated voltage exceeds a maximum operating voltage of the digital circuit. The boost stop circuit may include a voltage divider coupled to the output to generate a divided voltage, a comparator configured to compare the divided voltage against a reference voltage representing the maximum operating voltage, and logic circuitry coupled to an output of the comparator to generate a boost stop signal for disabling the clock gating circuit.

The device may include a counter clocked by the digital interface clock signal and detection logic coupled to outputs of the counter to generate timing control signals. The counter may be implemented as a Gray code counter configured to minimize switching noise during count transitions by ensuring only one bit changes at a time during count transitions. The detection logic may include first and second parallel detection paths monitoring the outputs of the Gray code counter, each detection path including an AND gate and a flip-flop to generate respective step signals, and a combining gate configured to combine the step signals with a boost stop signal to generate an enable signal for the clock gating circuit.

A method of regulating voltage supplied to a digital circuit includes receiving a supply voltage at an input of a voltage regulator, comparing a reference voltage to an output voltage of the voltage regulator using an amplifier, controlling a transistor coupled between the supply voltage and the output based on the comparison, during an integration phase based upon a first control signal, closing a first switch to charge a capacitor with a voltage above the conduction terminal to control terminal voltage of the transistor, and during a sharing phase based upon a second control signal, closing a second switch to couple the charged capacitor to a control terminal of the transistor to boost its conduction terminal to control terminal voltage, where the first and second control signals are non-overlapping signals generated by a non-overlapped phase generator with a given dead time maintained between their active periods, and enabling the non-overlapped phase generator using a clock gating circuit. The non-overlapped phase generator may be enabled based upon activation of a digital interface clock signal.

The method may include comparing the regulated voltage against a maximum operating voltage of the digital circuit and disabling the clock gating circuit when the regulated voltage exceeds the maximum operating voltage. The method may include monitoring counter outputs from a counter clocked by the digital interface clock signal, generating first and second step signals from the counter outputs using parallel detection paths, and combining the first and second step signals with a boost stop signal to generate an enable signal for the clock gating circuit. The counter may be implemented as a Gray code counter configured to minimize switching noise during count transitions by ensuring only one bit changes at a time during count transitions. The method includes maintaining the conduction terminal to control terminal voltage of the transistor at a quiescent value during quiescent operation, and during high-frequency operation of the digital circuit, adjusting the conduction terminal to control terminal voltage toward a target value corresponding to an increased load current during the sharing phase. The method further includes synchronizing the integration and sharing phases with current demands from the digital circuit.

### BRIEF DESCRIPTION OF THE DRAWINGS

FIG. 1A is a block diagram showing a MEMS sensor system with voltage regulators supplying power to analog and digital circuit sections.
FIG. 1B is a schematic diagram illustrating the detailed structure of a voltage regulator with gate voltage boosting capability and timing signals, such as may be used to drive the digital circuit section of the MEMS sensor system of FIG. 1A.
FIG. 2 is a timing diagram of various signals of the MEMS sensor system of FIGS. 1A-1B in operation.
FIG. 3 is a schematic diagram showing a boost stop signal generator circuit that prevents the regulator output voltage of FIGS. 1A-1B from exceeding maximum operating voltage.
FIG. 4 is a schematic diagram depicting a control circuit that implements timing control for the voltage regulator of FIGS. 1A-1B during SPI communication using a Gray code counter.

### DETAILED DESCRIPTION

The following disclosure enables a person skilled in the art to make and use the subject matter described herein. The general principles outlined in this disclosure can be applied to embodiments and applications other than those detailed above without departing from the spirit and scope of this disclosure. It is not intended to limit this disclosure to the embodiments shown, but to accord it the widest scope consistent with the principles and features disclosed or suggested herein.

Note that in the following description, any resistor or resistance mentioned is a discrete device, unless stated otherwise, and is not simply an electrical lead between two points. Therefore, any resistor or resistance connected between two points has a higher resistance than a lead between those two points, and such resistor or resistance cannot be interpreted as a lead. Similarly, any capacitor or capacitance mentioned is a discrete device, unless stated otherwise, and is not a parasitic element, unless stated otherwise.

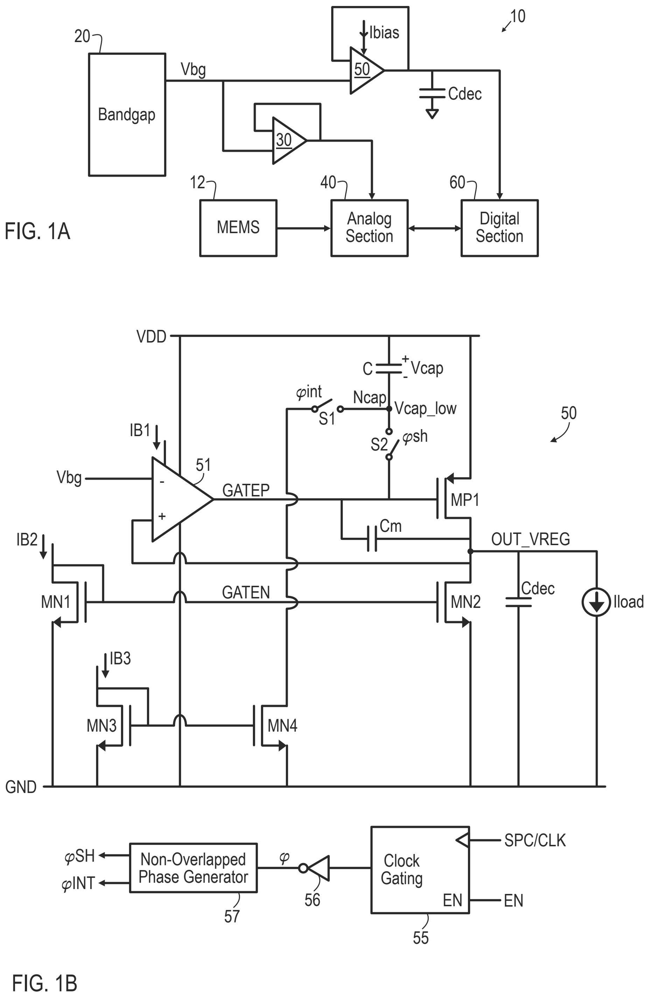

Referring now to FIG. 1A, a MEMS sensor system 10 includes a bandgap reference circuit 20 that provides reference voltages Vbg to voltage regulators 30 and 50. The voltage regulator 30 supplies power to an analog circuit section 40, while the voltage regulator 50 supplies power to a digital circuit section 60. The voltage regulator 50 is biased by a bias current Ibias and has a decoupling capacitor Cdec connected between its output and ground.

When the digital circuit section 60 operates at high frequencies, the digital circuit section 60 demands substantial current. While the decoupling capacitor Cdec helps stabilize the output voltage during abrupt load current changes, and the bias current Ibias establishes a stable operating point, so as to prevent the occurrence of issues when operating with reduced voltage headroom (such as when the supply voltage VDD is 1.2V and the regulator 50 is to supply a regulated output of 1.1V to the digital circuit section 60), the voltage regulator 50 disclosed herein has been developed.

Specifically, the voltage regulator 50, as shown in the circuit diagram of FIG. 1B, includes a first stage amplifier 51 powered between VDD and ground, and biased by bias current IB1. The inverting input terminal of amplifier 51 is coupled to receive bandgap voltage Vbg from the bandgap reference circuit 20 and the noninverting input terminal of amplifier 51 is connected in feedback to the output node OUT_VREG. P-channel transistor MP1 has its source coupled to VDD, its drain connected to the output node OUT_VREG, and its gate connected to receive the gate drive voltage GATEP generated at the output of amplifier 51. N-channel transistor MN2 has its drain connected to output node OUT_VREG, its source coupled to ground, and its gate connected to the gate of n-channel transistor MN1 to receive the gate drive voltage GATEN generated thereat. N-channel transistor MN1 has its drain and gate connected, with the drain receiving a bias current IB2, and has its source coupled to ground. MN1 and MN2 form a current mirror set to apply a fixed sink current equal to IB2 to the output node OUT_VREG.

N-channel transistor MN3 has its drain receiving the bias current IB3 and connected to its gate, and its source coupled to ground. N-channel transistor MN4 has its drain connected to a first terminal of switch S1, its source coupled to ground, and its gate connected to the gate of n-channel transistor MN3. MN3 and MN4 form a current mirror to mirror the current IB3 to be sunk from node Ncap when switch S1 is high.

The second terminal of switch S1 is connected to node Ncap. A capacitor C is connected between VDD and node Ncap, and a second switch S2 is connected between node Ncap and the gate of p-channel transistor MP1. Switch S1 is controlled by signal φint, and switch S2 is controlled by signal φsh. Miller capacitor Cm is connected between the gate of p-channel transistor MP1 and node OUT_VREG. Decoupling capacitor Cdec is connected between node OUT_VREG and ground, and the load current Iload drawn by the digital circuit section 60 is sunk from node OUT_VREG.

A clock gating circuit 55 has a clock input coupled to receive a clock signal CLK (also referred to herein as SPC), an enable input coupled to receive an enable signal EN, and an output connected to the input of inverter 56. The output of inverter 56 generates a signal φ that is connected to the input of non-overlapped phase generator 57, which outputs non-overlapping signal φsh and signal φint.

The operation of voltage regulator 50 will now be described. During normal operation, when the digital circuit section 60 is not actively communicating via its interface (e.g., SPI communication), the load current Iload is relatively small. The amplifier 51 maintains the output voltage at node OUT_VREG at the desired regulated level by comparing it to the bandgap reference voltage Vbg and adjusting the gate voltage of p-channel transistor MP1 accordingly.

When the digital circuit section 60 begins interface communication, such as SPI data transfers at high frequencies (e.g., 10MHz), the load current Iload increases substantially. This sudden increase in current demand can cause a voltage drop at node OUT_VREG due to the limited bandwidth of the regulator 50, which is proportional to the ratio of bias current IB1 to Miller capacitor Cm when the input pair transistors of 51 works in subthreshold region.

The source to gate voltage VSG of MP1 depends directly on the output current requested, with ILOAD_TARGET corresponding to VSG_TARGET. During quiescent operation when no current is required by the digital circuit section 60 (e.g., Iload = 0), VSG is maintained at a value of VSG_QUIESCENT. However, when the SPI clock is active, the digital circuit section 60 demands ILOAD_TARGET, necessitating VSG to adjust to VSG_TARGET.

To compensate for this voltage drop without increasing the bias current IB1 and the capacitance of the decoupling capacitor Cdec, the voltage regulator 50 implements a source-to-gate voltage boosting circuit. This boosting circuit includes the capacitor C, switches S1 and S2, the current mirror MN3 - MN4 and the non-overlapped phase generator 57 that controls these switches via signals φsh and φint.

When enabled, the clock gating circuit 55 provides a gated clock signal through inverter 56 to the non-overlapped phase generator 57. The non-overlapped phase generator 57 generates two non-overlapping phase signals φsh and φint.

When the SPI clock is off, capacitor C operates in parallel with the capacitance Cgs of MP1 (with φsh maintained high) to store VSG_QUIESCENT. When the SPI clock is ON, the circuit operates in two phases, namely an integration phase and a sharing phase.

During the integration phase when φint is active (logic high) and φsh is inactive (logic low), switch S1 is closed and switch S2 is opened.

The voltage VCAP at node Ncap during the integration phase follows the equation VCAPᵢ= VSGᵢ₋₁ + (IB3/C)×ΔT for i>0 (for i=0, VCAP₀ = VSG₀ = VSG_QUIESCENT) where:
VSG is the source-to-gate voltage of MP1, IB3 is the bias current through transistor MN3/MN4, C is the boosting capacitor value, and ΔT is the fixed integration time period controlled by the non-overlapped phase generator (ΔT is the duration that φint remains high during each clock cycle).

This integration occurs periodically with each clock cycle when the digital circuit section is active, ensuring that VCAP maintains the appropriate voltage level above VSG to compensate for increased current demands.

During the subsequent φsh sharing phase, φsh becomes active and φint becomes inactive. Switch S1 opens and switch S2 closes, connecting capacitor C in parallel with the Cgs capacitance of MP1. This connection provides for quick adjustment of the VSG MOS driver toward VSG_TARGET, temporarily increasing the current sourcing capability of MP1 to respond more quickly to the increased load current demand despite the bandwidth limitations of the regulator 50 that may be present. The alternating operation of S1 and S2 creates a charge pump effect, continuously refreshing the boosted source-gate voltage to speed up the response of the regulator during high-load periods when enhanced current sourcing capability is required.

The duration ΔT of the integration phase is independent of the digital interface operating frequency, allowing for consistent compensation regardless of the interface clock speed.

By implementing this source-gate voltage boosting technique, the voltage regulator 50 can maintain its output voltage during high frequency digital interface operations while maintaining low quiescent current operation through relatively small bias currents Ib1, Ib2, and Ib3.

The non-overlapped phase generator 57 ensures that signals φint and φsh do not overlap, preventing direct connection between the integration phase and sharing phase operations. During operation, when EN is active, the clock gating circuit 55 passes the clock signal through to inverter 56, which provides an edge for the non-overlapped phase generator 57. The non-overlapped phase generator 57 then produces the two phase signals φint and φsh with a guaranteed dead time between their active periods. The non-overlapping phases ensure that capacitor C is never simultaneously connected to both MP1 (through S2) and MN4 (through S1), as S1 and S2 operate in a mutually exclusive manner. During φint, C connects to MN4 for charging, while during φsh, C connects to MP1's gate for voltage boosting, with guaranteed dead time between these connections.

The switching system implements a precise timing relationship between the interface operating frequency (e.g., SPI clock frequency) and capacitor refresh cycles, providing for the voltage adjustments on the gate of MP1 to be synchronized with the current demands from the digital circuit section 60.

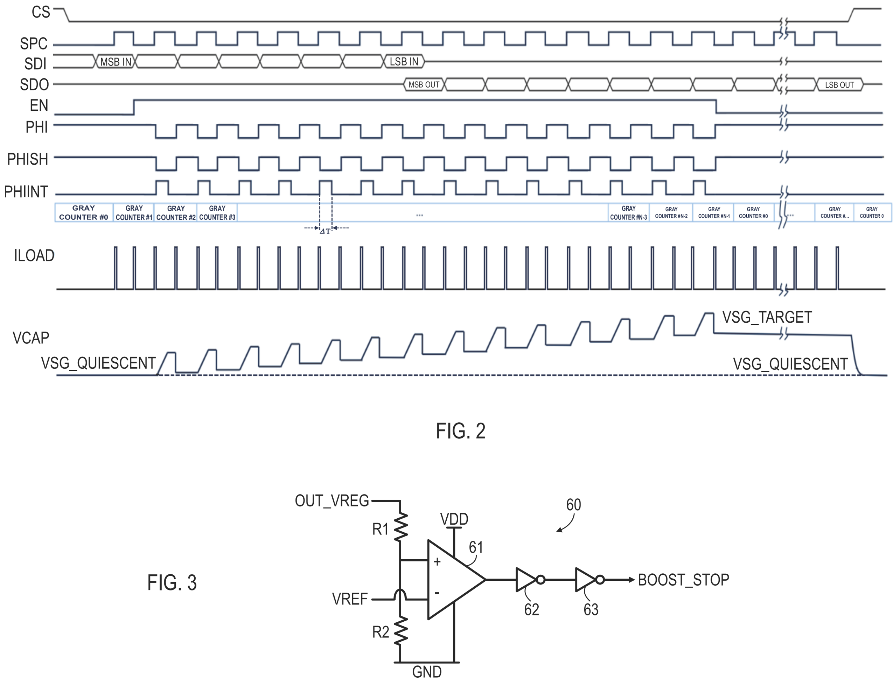

The timing diagram in FIG. 2 illustrates the relationship between these signals during an example SPI read operation. When CS becomes active (transitions low) to initiate a digital interface operation, this triggers several responses in the system. The boost operation is inherently synchronized with the current demands of the digital interface, as the clock gating circuit 55 receives the same clock signal (SPC) that drives the digital interface operations. This ensures that the voltage boosting occurs in direct response to, and in synchronization with, the interface's active periods and corresponding current demands. The EN signal, derived from the interface's chip select (CS) signal, ensures that boost operations only occur when the interface is actually requesting current. When these conditions are met, SDI begins receiving serial data (starting with MSB IN and continuing to LSB IN), then SDO transmits serial data (from MSB OUT to LSB OUT) synchronized to the SPC clock. The EN signal activates in response to CS going low, which enables the clock gating circuit 55 to begin passing the SPC clock.

PHI from inverter 56 drives the non-overlapped phase generator 57, which generates φint and φsh. The non-overlapped phase generator 57 generates φint with a pulse width ΔT that is independent of the SPC clock frequency, providing consistent charging of capacitor C regardless of the digital interface operating speed. These non-overlapping phases control switches S1 and S2.

The Gray counter states shown in the timing diagram coordinate these operations. During communication, VCAP voltage transitions from its initial VSG_QUIESCENT level through multiple boost operations. Each boost cycle raises VCAP during the integration phase, and it then settles toward VSG_TARGET during the sharing phase. Once communication ends, VCAP returns to VSG_QUIESCENT level.

After φint returns low and a dead time has elapsed to prevent any shoot through current paths, φsh becomes active to connect the charged capacitor to the gate of MP1. The dead time between φint and φsh transitions is critical to prevent any direct path between the charging circuit and the PMOS gate node, which could otherwise lead to voltage spikes or unstable operation.

The non-overlapped phase generator 57 may be implemented using conventional logic gates and delay elements to ensure proper timing relationships between φint and φsh. For example, cross-coupled NAND gates with delay chains can be used to generate the non-overlapping characteristic, while one-shot circuits can establish the fixed ΔT pulse width for φint.

This implementation provides for robust operation of the voltage boosting circuit while maintaining low power consumption through careful timing control of the charge transfer process.

Referring now to FIG. 3, the voltage regulator 50 may also include a BOOST_STOP signal generator circuit 60 that serves to prevent the regulator output voltage from exceeding the maximum operating voltage of the digital logic, which is of particular interest during multiple communication burst scenarios. The circuit 60 includes a comparator 61 powered between VDD and ground, followed by two inverters 62 and 63 at its output.

The comparator 61 monitors OUT_VREG through a voltage divider network formed by resistors R1 and R2. The divider produces a scaled version of OUT_VREG according to the equation: $VSENSE = R 2 / \left(R1+R2\right) \times OUT _ VREG$

When OUT_VREG exceeds OUT_VREG_MAX, the comparator output transitions, and after being passed through inverters 62 and 63, generates a logic high BOOST_STOP signal. This BOOST_STOP signal, when asserted, is provided to the clock gating circuit 55 (shown in FIG. 1B) to disable the clock signal to the non-overlapped phase generator 57, effectively stopping the boost capacitor switching operation. By halting the boost capacitor charging and sharing phases, the BOOST_STOP signal here (when asserted) acts to prevent further voltage increase at the regulator output.

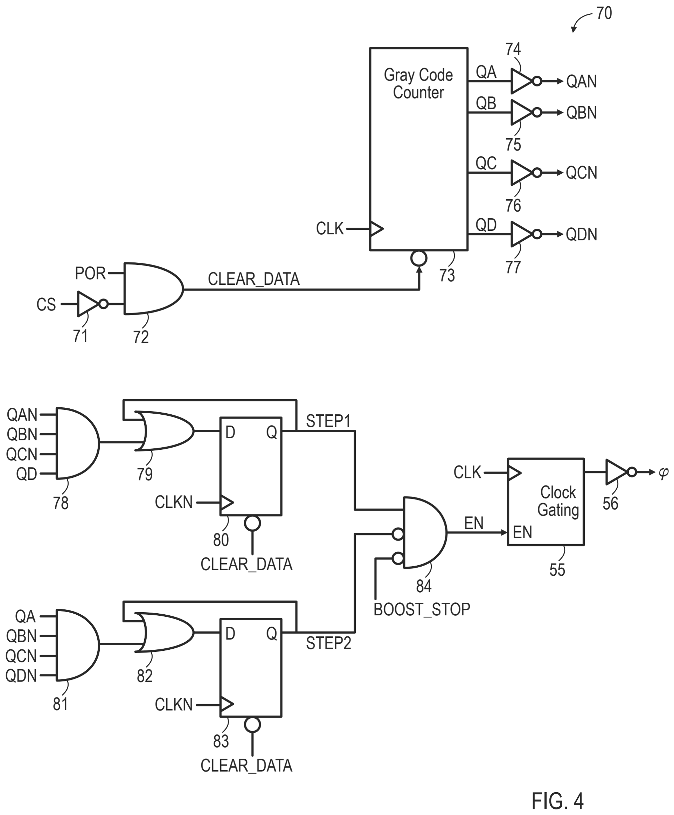

Referring now to FIG. 4, a control circuit 70 is shown that may be used to implement the timing control for the voltage regulator during SPI communication. The control circuit 70 utilizes a Gray code counter 73 rather than a conventional binary counter to minimize switching noise and glitches during count transitions, as Gray code ensures that with each count increment only one bit changes at a time. This is particularly important in this sensitive analog circuit where switching noise could affect the regulated output voltage, and where a Gray counter with its outputs QA-QD and their inverted versions QAN-QDN can provide a sequence of states that enable precise timing control of the boost operations. While a Gray code counter is utilized in this embodiment due to its advantages in minimizing switching noise, other suitable counting schemes may be implemented, with appropriate consideration for noise management and glitch prevention in the sensitive analog circuit environment.

The counter is clocked by the CLK signal and has a clear input controlled by a CLEAR_DATA signal, which itself is generated by the combination of the power-on-reset signal and chip select signal (in the case of SPI communication) through inverter 71 and AND gate 72.

Two parallel detection paths monitor the counter outputs to generate control signals STEP1 and STEP2. The first path includes a AND gate 78 receiving as input QAN, QBN, QCN, and QD, and providing output through OR gate 79 and flip-flop 80. Similarly, the second path uses AND gate 81 receiving as input QA QBN, QCN, and QDN and providing output through OR gate 82 and flip-flop 83. Both flip-flops 80 and 83 are clocked by CLKN (e.g., inverted version of CLK) and can be reset by the CLEAR_DATA signal.

The STEP1 and STEP2 signals are received by AND gate 84 along with the BOOST_STOP signal to generate the enable signal EN for the clock gating circuit 55. The clock gating circuit 55, as described above, then generates the phi φ signals through inverter 56.

This implementation specifically targets SPI interface operation, although the design can be adapted for other serial interfaces such as I²C or I³C, as well as any other applications requiring management of large current demands, such as on-board microprocessors. The Gray code counter 73 and detection logic provide for proper timing of the boost operations in synchronization with the clock CLK, while maintaining the ability to disable the boost function through the BOOST_STOP signal as described hereinabove.

Finally, it is evident that modifications and variations can be made to what has been described and illustrated herein without departing from the scope of this disclosure.

Although this disclosure has been described with a limited number of embodiments, those skilled in the art, having the benefit of this disclosure, can envision other embodiments that do not deviate from the disclosed scope. Furthermore, skilled persons can envision embodiments that represent various combinations of the embodiments disclosed herein made in various ways.

## Claims

1. A device comprising a voltage regulator (50) having an input coupled to receive a supply voltage (VDD) and an output (OUT _VREG) configured to provide a regulated voltage to a digital circuit (60), the voltage regulator comprising:
an amplifier (51) having a first input coupled to receive a reference voltage (Vbg) and a second input coupled to the output (OUT_VREG);
a transistor (MP1) having a first conduction terminal (source) coupled to the supply voltage (VDD), a second conduction terminal (drain) coupled to the output (OUT_VREG), and a control terminal (gate) coupled to an output of the amplifier (51);
a capacitor (C) coupled between the supply voltage (VDD) and a first node (Ncap);
a first switch (S1) coupled between the first node (Ncap) and a bias current source (MN4, IB3);
a second switch (S2) coupled between the first node (Ncap) and the control terminal (gate) of the transistor (MP1);
a non-overlapped phase generator (57) configured to generate non-overlapping first and second control signals (φint, φsh) to control the first and second switches (S1, S2) respectively, wherein:
during an integration phase controlled by the first control signal (φint), the first switch (S1) is closed to charge the capacitor (C) with a voltage above the conduction terminal to control terminal voltage of the transistor (MP1), and
during a sharing phase controlled by the second control signal (φsh), the second switch (S2) is closed to couple the charged capacitor (C) to the control terminal (gate) of the transistor (MP1) to adjust its control terminal voltage for increasing current sourcing capability during high-frequency operation of the digital circuit (60); and
a clock gating circuit (55) configured to enable the non-overlapped phase generator (57).

2. The device of claim 1, wherein during the sharing phase, the charged capacitor (C) is coupled to the control terminal (gate) of the transistor (MP1) to boost a source-to-gate voltage of the transistor (MP1) above its quiescent value.

3. The device of any of the previous claims, wherein the clock gating circuit (55) enables the non-overlapped phase generator (57) in response to activation of a digital interface clock signal (CLK/SPC).

4. The device of any of the previous claims, wherein the clock gating circuit (55) enables the non-overlapped phase generator (57) when an application clock results in a large current demand.

5. The device of any of the previous claims, further comprising: a boot stop circuit (60) configured to monitor the regulated voltage (OUT_VREG) and disable the clock gating circuit (55) when the regulated voltage exceeds a maximum operating voltage of the digital circuit (60).

6. The device of claim 5, wherein the boost stop circuit (60) comprises:
a voltage divider (R1, R2) coupled to the output (OUT _VREG) to generate a divided voltage (VSENSE);
a comparator (61) configured to compare the divided voltage (VSENSE) against a reference voltage representing the maximum operating voltage; and
logic circuitry (62, 63) coupled to an output of the comparator (61) to generate a boost stop signal (BOOST_STOP) for disabling the clock gating circuit (55).

7. The device of any of the previous claims, further comprising:
a code counter (73) clocked by a digital interface clock signal (CLK/SPC); and
detection logic (78, 79, 80, 81, 82, 83, 84) coupled to outputs of the counter (73) to generate timing control signals;
wherein the counter (73) is configured to minimize switching noise during count transitions.

8. The device of claim 7, wherein the counter (73) is a Gray code counter configured to minimize switching noise during count transitions by ensuring only one bit changes at a time during count transitions.

9. The device of claim 8, wherein the detection logic comprises:
first and second parallel detection paths (78, 79, 80; 81, 82, 83) monitoring the outputs of the Gray code counter (73), each detection path including an AND gate and a flip-flop to generate respective step signals (STEP1, STEP2); and
a combining gate (84) configured to combine the step signals (STEP1, STEP2) with a boost stop signal (BOOST_STOP) to generate an enable signal (EN) for the clock gating circuit (55).

10. The device of any of the previous claims, wherein the transistor (MP1) is a p-channel transistor, the first conduction terminal of the transistor is a source, the second conduction terminal of the transistor is a drain, and the control terminal of the transistor is a gate, the conduction terminal to control terminal voltage is a source-to-gate voltage of the p-channel transistor (MP1), and the control terminal voltage is a gate voltage.

11. The device of claim 10, wherein:
during quiescent operation when no current is required by the digital circuit (60), the conduction terminal to control terminal voltage of the transistor (MP1) is maintained at a quiescent value (VSG_QUIESCENT); and
during high-frequency operation of the digital circuit (60), the sharing phase provides for quick adjustment of the conduction terminal to control terminal voltage toward a target value (VSG_TARGET) corresponding to an increased load current.

12. The device of any of the previous claims, wherein:
a digital interface clock signal is a serial peripheral interface (SPI) clock signal (SPC); and
the non-overlapped phase generator (57) is configured to generate the first and second control signals (φint, φsh) with a guaranteed dead time between their active periods to prevent direct connection between the integration phase and the sharing phase.

13. The device of any of the previous claims, wherein:
a duration of the integration phase is independent of an operating frequency of a digital interface clock signal (SPC); and
the clock gating circuit (55) is configured to synchronize the integration and sharing phases with current demands from the digital circuit (60).

14. A method of regulating voltage supplied to a digital circuit (60), comprising:
receiving a supply voltage (VDD) at an input of a voltage regulator (50);
comparing a reference voltage (Vbg) to an output voltage (OUT_VREG) of the voltage regulator (50) using an amplifier (51);
controlling a transistor (MP1) coupled between the supply voltage (VDD) and the output (OUT_VREG) based on the comparison;
during an integration phase based upon a first control signal (φint), closing a first switch (S1) to charge a capacitor (C) with a voltage above a conduction terminal to control terminal voltage of the transistor (MP1);
during a sharing phase based upon a second control signal (φsh), closing a second switch (S2) to couple the charged capacitor (C) to a control terminal (gate) of the transistor (MP1) to adjust its control terminal voltage, wherein the first and second control signals (φint, φsh) are non-overlapping signals generated by a non-overlapped phase generator (57); and
enabling the non-overlapped phase generator (57) using a clock gating circuit (55).
